**Europäisches Patentamt**

**European Patent Office**

**Office européen des brevets**

(19)

(11) Veröffentlichungsnummer: **0 055 360**
**A1**

(12)

# EUROPÄISCHE PATENTANMELDUNG

(21) Anmeldenummer: 81108881.4

(22) Anmeldetag: 24.10.81

(51) Int. Cl.³: **G 01 M 3/26**
**G 01 M 13/00**

(30) Priorität: 31.12.80 DE 3049628

(43) Veröffentlichungstag der Anmeldung:
07.07.82 Patentblatt 82/27

(84) Benannte Vertragsstaaten:
AT DE FR GB IT SE

(71) Anmelder: BASF Aktiengesellschaft
Carl-Bosch-Strasse 38
D-6700 Ludwigshafen(DE)

(72) Erfinder: Dressel, Mandred, Dipl.-Ing.
Geibring 9
D-6715 Lambsheim(DE)

(72) Erfinder: Greven, Johannes
Wormser Strasse 78
D-6840 Lampertheim 1(DE)

(72) Erfinder: Jeck, Arnulf, Dipl.-Ing.
Sternbergstrasse 4
D-6730 Neustadt(DE)

(72) Erfinder: Magin, Rudolf, Dr.
Laurentiusstrasse 2
D-6707 Schifferstadt(DE)

(72) Erfinder: Nick, Guenther
Kirchenstrasse 24
D-6701 Neuhofen(DE)

(72) Erfinder: Schaffarczyk, Paul
Verdistrasse 5
D-6720 Speyer(DE)

(72) Erfinder: Weiss, Guenther, Dr.
Roemerweg 21
D-6706 Wachenheim(DE)

(54) Verfahren und Vorrichtung zur Überwachung des Entstehens und Fortschreitens von Rissen in Maschinenteilen und Bauteilen.

(57) Zur Überwachung des Entstehens und Fortschreitens von Rissen in Maschinenteilen und Bauteilen, insbesondere in rotierenden Wellen von Kraft- und Arbeitsmaschinen ist im nicht gerissenen Abschnitt des Bauteils mindestens eine sich mit der zu erwartenden Rißebene (5) überschneidende Bohrung (7) angebracht, die Bohrung (7) mit einem Gas bzw. einer Flüssigkeit gefüllt, das Gas bzw. die Flüssigkeit auf einen Druck oberhalb des Umgebungsdrucks eingestellt, die Bohrung (7) zur Umgebung hin mit einem Verschluß versehen und über eine Leitung (8) mit einem Gerät zur Anzeige eines Druckabfalls des in der Bohrung (7) befindlichen Mediums verbunden.

FIG.1

EP 0 055 360 A1

BASF Aktiengesellschaft                    O.Z. 0050/034841

Verfahren und Vorrichtung zur Überwachung des Entstehens und Fortschreitens von Rissen in Maschinenteilen und Bauteilen

Die Erfindung betrifft ein Verfahren und eine Vorrichtung zur Überwachung des Entstehens und Fortschreitens von Rissen in Maschinenteilen und Bauteilen, insbesondere in rotierenden Wellen von Kraft- und Arbeitsmaschinen. Eine solche Überwachung ist wichtig, da Brüche solcher Maschinen- und Bauteile häufig zu großen Schäden führen, die aufwendige Reparaturen, teure Ersatzbeschaffungen und teilweise lange Ausfallzeiten der Aggregate zur Folge haben.

Das Prüfen von Maschinen- und Bauteilen auf Risse ist Gegenstand der sogenannten zerstörungsfreien Werkstoffprüfung. Hierbei sind für die Rißerkennung in Bauteilen zahlreiche Verfahren entwickelt worden, deren wichtigste Vertreter die Röntgen- und Gamma-Durchstrahlung, das Ultraschallprüfverfahren, das Farbeindring- und Diffusionsverfahren, das elektro- und magnetinduktive Verfahren, die Verwendung von Dehnungsstreifen und Reißdrähten, das Klangprüfverfahren und das Schwingungsmeßverfahren sind. Vielen dieser Verfahren gemeinsam ist, daß die Prüfung nicht am rotierenden Bauteil vorgenommen werden kann, so daß eine Prüfung nur diskontinuierlich durchgeführt werden kann und vor jeder Prüfung die Anlage stillgesetzt und unter Umständen das betreffende Bauteil ausgebaut werden muß. Bei der Klangprobe zeigt sich beim Anschlagen durch Klangveränderung das Vorhandensein von Rissen. Oft ist das Anschlagen von Bauteilen im Betrieb aber nicht möglich oder es führt wegen der Bauteilgröße ein Riß zu keiner erfaßbaren Klangveränderung. Bei der Schwingungsmessung von Bauteilen werden Änderungen von Amplitude oder Frequenz erfaßt und daraus Rückschlüsse auf Veränderungen im Bauteil gezogen. Obwohl Schwingungen relativ genau meßbar sind, versagt das

Go/BL

0055360

Verfahren, wenn ein Riß z.B. unter einem aufgeschrumpften zweiten Bauteil entsteht, da hier aufgrund der Stützwirkung des zweiten Bauteils keine erfaßbare Schwingungsänderung auftritt. Außerdem besteht der Nachteil, daß bei rotierenden Teilen nur indirekt über die Schwingung eines Bauteils, z.B. eines Lagerblocks gemessen werden kann.

Alle bekannten Verfahren haben den Nachteil, daß sie insbesondere bei rotierenden Maschinenteilen, verdeckten Rissen, bestimmten Werkstoffen oder in explosionsgefährdeten Bereichen nur bedingt einsetzbar sind und eine kontinuierliche Überwachung mit Meßsignalübertragung nicht möglich ist.

Der Erfindung liegt daher die Aufgabe zugrunde, ein Verfahren und eine Vorrichtung zu entwickeln, mit denen das Entstehen eines Risses in einem festen oder bewegten Bauteil feststellbar ist, das Fortschreiten eines Risses kontinuierlich überwacht werden kann und sowohl das Entstehen als auch das Fortschreiten des Risses mit einer Meßeinrichtung zur Anzeige gebracht werden kann.

Diese Aufgabe wird erfindungsgemäß durch ein Verfahren gelöst, bei dem im nicht gerissenen Abschnitt des Bauteils mindestens eine sich mit der zu erwartenden Rißebene überschneidende, für ein Medium durchlässige Zone vorgesehen wird, die durchlässige Zone mit einem Medium gefüllt wird, das Medium auf einen definierten, vom Umgebungsdruck abweichenden Druck eingestellt wird, die durchlässige Zone zur Umgebung abgeschlossen und mit einer Einrichtung zur Anzeige einer durch den Riß hervorgerufenen Druckänderung leitend verbunden wird.

In einer vorteilhaften Ausgestaltung der Erfindung ist die durchlässige Zone als Bohrung ausgeführt, wobei das in die Bohrung eingebrachte Medium durch Verdichtung oder Evakuierung auf einen Druck oberhalb oder unterhalb des Umgebungsdrucks eingestellt ist, die Bohrung zur Umgebung hin mit einem Verschluß versehen und über eine Leitung mit einem Gerät zur Anzeige einer durch den Riß hervorgerufenen Druckänderung des in der Bohrung befindlichen Mediums verbunden ist.

Zur Vergrößerung des Druckabfalls bzw. Druckanstiegs kann im nicht gerissenen oder im bereits gerissenen Abschnitt des Bauteils mindestens eine sich mit der zu erwartenden Rißebene überschneidende, zwischen dem vorhandenen oder erwarteten Anriß und der Bohrung liegende Entlüftungsbohrung angebracht sein.

Das Gerät zur Anzeige eines Druckabfalls bzw. Druckanstiegs kann in Form eines Druck-Weg-Umformers ausgebildet sein, wobei der Druck-Weg-Umformer entweder mit einem berührungslosen Meßsystem zur Anzeige einer Druckänderung oder mit einem Kontaktgeber zur Anzeige einer Grenzwertüberschreitung der Druckänderung ausgerüstet ist.

Als eine zusätzliche Maßnahme zur Anzeige eines Druckabfalls und damit zur Anzeige einer Rißveränderung, kann zwischen der Bohrung und dem Gerät zur Anzeige eines Druckabfalls ein unter demselben Druck wie die Bohrung stehendes Puffergefäß vorgesehen werden.

Als Medium können Gase und Flüssigkeiten verwendet werden.

Die Einzelheiten der Erfindung sind anhand zweier Ausführungsbeispiele in der Zeichnung dargestellt und werden im folgenden näher beschrieben.

Es zeigen:

Figur 1 einen Längsschnitt einer Kurbelwelle mit aufgeschrumpfter Kurbelwange und eine Einrichtung zur
Erfassung einer Druckänderung

Figur 2 eine Ansicht einer auf eine Kurbelwelle aufgeschrumpften Kurbelwange

Figur 3 eine Seitenansicht eines Kolbenkompressors

Figur 4 einen Teilausschnitt aus dem in Figur 3 dargestellten Kolbenkompressor und eine Einrichtung
zur Erfassung einer Druckänderung

Figur 5 eine Teilansicht aus dem in Figur 3 dargestellten Kolbenkompressor.

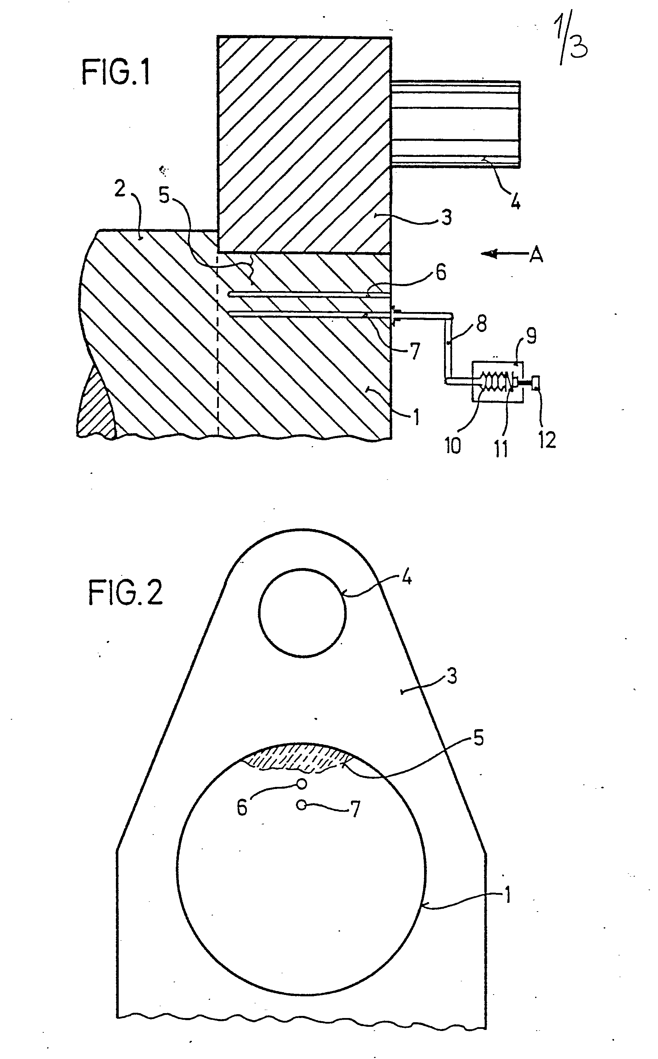

Gemäß den Figuren 1 und 2 ist auf dem Kurbelzapfen 1 einer
Kurbelwelle 2 die Kurbelwange 3 aufgeschrumpft. In die
Kurbelwange 3 ist der Kurbelzapfen 4 eingeschrumpft. Unter
der Kurbelwange 3 liegt von dieser verdeckt ein Riß 5.
Unterhalb der Bruchlinie werden eine Entlüftungsbohrung 6
und eine mit einem Rohrleitungssystem 8 verbundene Bohrung 7 angebracht. Über das Rohrleitungssystem 8 ist die
Bohrung 7 mit einem Druck-Weg-Umformer 9 verbunden. Dieser Druck-Weg-Umformer 9 besteht aus einem Druckmeßbalg
10, einer Gegenfeder 11 und einer Übertragungsvorrichtung
12 für berührungslosen Abgriff.

Die Bohrung 7, das Rohrleitungssystem 8 und der Druckmeßbalg 10 werden unter Druck gestellt und dicht verschlossen.
Die Entlüftungsbohrung 6 bleibt drucklos. Wenn die Rißfront 5 bis zur Bohrung 7 fortschreitet, erfolgt in Bohrung 7, im Rohrleitungssystem 8 und im Druckmeßbalg 10 ein Druckabfall. Dieser wird mit Hilfe des Druck-Weg-Umformers 9 in eine Wegänderung übergeführt und die Übertragungsvorrichtung 12 wird in Richtung Druckmeßbalg 10 bewegt. Diese Wegänderung wird berührungslos induktiv, kapazitiv, pneumatisch oder hydraulisch mit bekannten, handelsüblichen Meß- und Regelgeräten gemessen. Die Bohrung 6 trägt dabei zu einer zeitlich schnelleren Druckänderung bei.

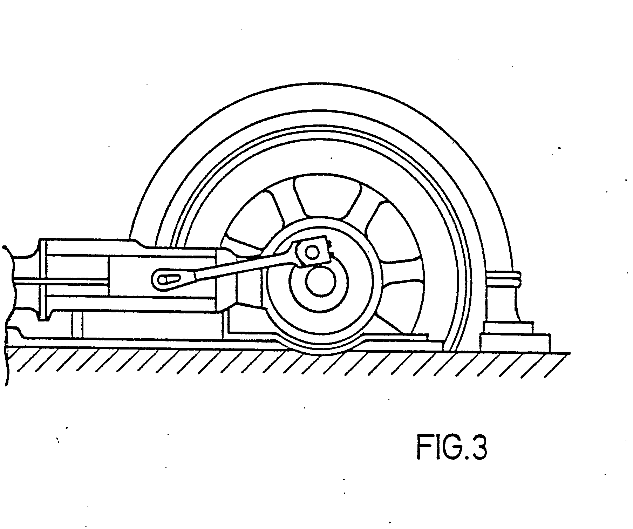

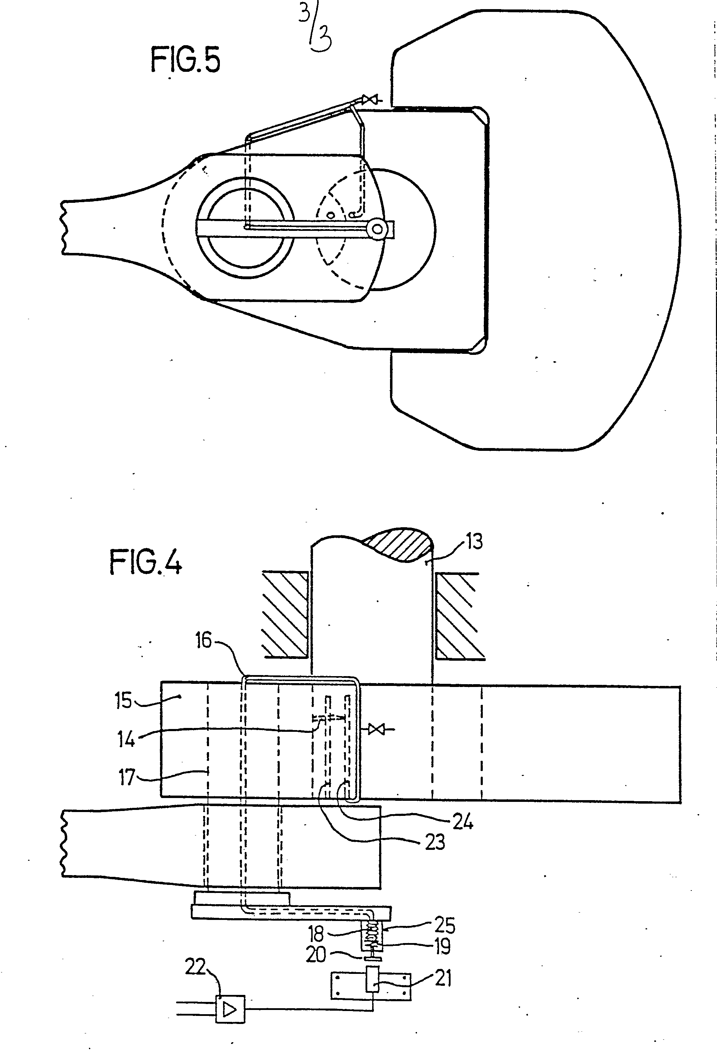

In einem anderen, in den Figuren 3 bis 5 dargestellten Ausführungsbeispiel ist bei einem Stickstoff-Kolbenverdichter, dessen Kurbelwelle 13 bereits angerissen war, die Überwachung des Fortschreitens des Risses 14 erforderlich gewesen, da bei unkontrolliertem Weiterbetrieb des Verdichters und plötzlichem Bruch der Kurbelwelle große Schäden auftreten können. Der Anriß, der sich unter der aufgeschrumpften Kurbelwange 15 befindet, war zuvor nach dem Ultraschallmeßverfahren bei Maschinenstillstand festgestellt worden. Der Aufbau des Drucksystems 16, hergestellt aus Hochdruckrohrleitungen mit 3 mm Ø, wurde in diesem Fall dadurch erschwert, daß die Rohrleitung hinter die Kurbelwange 15 gelegt und durch den Kurbelzapfen 17 geführt werden mußte, damit eine Meßwertübertragung in der Motorwellenachse vorgenommen werden konnte. Dieser aufwendige Aufbau des Drucksystems 16 kann bei Motoren und Turboverdichtern entfallen. Das Drucksystem 16 ist mit einem Druck-Weg-Umformer 25 - bestehend aus Druckmeßbalg 18, Gegenfeder 19 und Übertragungsvorrichtung 20 für berührungslosen Abgriff verbunden. Als berührungsloser Wegmesser 21 wird ein handelsüblicher elektrisch-induktiver Aufnehmer verwendet, der wiederum mit einem üblichen Meßverstärker 22 für Meldung und Schaltung gekoppelt ist.

Bei Weiterschreiten des Risses 14 über die Entlüftungsbohrung 23 bis zur Bohrung 24, die mit dem Drucksystem 16 verbunden ist, entspannt sich das eingeschlossene, komprimier-

**0055360**

te Medium über den fortgeschrittenen Riß 14 und die Entlüftungsbohrung 23. Dadurch wird im Druck-Weg-Umformer 25 der Druckmeßbalg 18 durch die Gegenfeder 19 zusammengedrückt und die Übertragungsvorrichtung 20 für den berührungslosen Abgriff in Richtung Kurbelwelle bewegt. Diese Bewegung wird im Wegmesser 21 elektrisch-induktiv gemessen und die Änderung des Stromflusses wird mittels eines üblichen Meßverstärkers 22 zur Gefahren-Meldung und Kompressor-Abschaltung benützt.

Die mit der Erfindung erzielbaren Vorteile sind insbesondere darin zu sehen, daß mit konventionellen Maßnahmen, auch bei rotierenden Bauteilen von außen nicht sichtbare, verdeckte Risse materialunabhängig, wartungsfrei und kontinuierlich während des Betriebes überwacht werden können. Dazu ist minimaler Platzbedarf notwendig. Das das Meßsignal auslösende Medium braucht nur einmal eingebracht und Verlustenergie nicht gedeckt zu werden.

Anwendungsmöglichkeiten für die Erfindung bestehen bei allen riß- oder bruchgefährdeten Bauteilen, wie z.B. Motorwellen, Kurbelwellen, Walzwerkwellen, Kranbahnen, Trägern und Stützen.

Patentansprüche

1. Verfahren zur Überwachung des Entstehens und Fortschreitens von Rissen in Maschinenteilen und Bauteilen, insbesondere in rotierenden Wellen von Kraft- und Arbeitsmaschinen, dadurch gekennzeichnet, daß im nicht gerissenen Abschnitt des Bauteils mindestens eine sich mit der zu erwartenden Rißebene (5) überschneidende, für ein Medium durchlässige Zone vorgesehen wird, die durchlässige Zone mit einem Medium gefüllt wird, das Medium auf einen definierten, vom Umgebungsdruck abweichenden Druck eingestellt wird, die durchlässige Zone zur Umgebung abgeschlossen und mit einer Einrichtung zur Anzeige einer durch den Riß hervorgerufenen Druckänderung leitend verbunden wird.

2. Vorrichtung zur Durchführung des Verfahrens gemäß Anspruch 1, dadurch gekennzeichnet, daß im nicht gerissenen Abschnitt des Bauteils mindestens eine sich mit der zu erwartenden Rißebene (5) überschneidende Bohrung (7) angebracht ist, die Bohrung (7) mit einem Gas bzw. einer Flüssigkeit gefüllt ist, das Gas bzw. die Flüssigkeit auf einen Druck oberhalb des Umgebungsdrucks eingestellt ist, die Bohrung (7) zur Umgebung hin mit einem Verschluß versehen und über eine Leitung (8) mit einem Gerät zur Anzeige eines Druckabfalls des in der Bohrung (7) befindlichen Mediums verbunden ist.

3. Vorrichtung zur Durchführung des Verfahrens gemäß Anspruch 1, dadurch gekennzeichnet, daß im nicht gerissenen Abschnitt des Bauteils mindestens eine sich mit der zu erwartenden Rißebene (5) überschneidende Bohrung angebracht ist, die Bohrung (7) mit einem Gas gefüllt ist, das Gas auf einen Druck unterhalb des Umgebungsdrucks eingestellt ist, die Bohrung (7) zur Umgebung hin mit einem Verschluß versehen und über eine Leitung (8) mit einem Gerät zur Anzeige eines Druckanstiegs des in der Bohrung befindlichen Gases verbunden ist.

4. Vorrichtung gemäß Anspruch 2 oder 3, <u>dadurch gekennzeichnet</u>, daß zur Vergrößerung des Druckabfalls bzw. Druckanstiegs im nicht gerissenen oder im bereits gerissenen Abschnitt des Bauteils mindestens eine sich mit der zu erwartenden Rißebene überschneidende, zwischen dem vorhandenen oder erwarteten Anriß und der Bohrung (7) liegende Entlüftungsbohrung (6) angebracht ist.

5. Vorrichtung gemäß den Ansprüchen 2 bis 4, <u>dadurch gekennzeichnet</u>, daß das Gerät zur Anzeige eines Druckabfalls bzw. Druckanstiegs in Form eines Druck-Weg-Umformers (9) ausgebildet ist.

6. Vorrichtung gemäß Anspruch 5, <u>dadurch gekennzeichnet</u>, daß der Druck-Weg-Umformer (9) mit einem berührungslosen Meßsystem zur Anzeige der Druckänderung ausgerüstet ist.

7. Vorrichtung gemäß Anspruch 5, <u>dadurch gekennzeichnet</u>, daß der Druck-Weg-Umformer (9) mit einem Kontaktgeber zur Anzeige einer Grenzwertüberschreitung der Druckänderung ausgerüstet ist.

8. Vorrichtung gemäß Anspruch 2 oder 4, dadurch gekennzeichnet, daß zwischen der Bohrung (7) und dem Gerät
zur Anzeige eines Druckabfalls ein unter demselben
Druck wie die Bohrung (7) stehendes Puffergefäß vorgesehen ist.


Zeichn.

FIG.1

0055360

1/3

A

FIG.2

0055360

2/3

FIG.3

0055360

FIG.5

FIG.4

13

16

15

14

17

24

23

18 25

20 19

22

21

0055360

Nummer der Anmeldung

EP 81 10 8881.4

Europäisches
Patentamt

**EUROPÄISCHER RECHERCHENBERICHT**

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | <u>DE - A1 - 2 756 646</u> (CONTINENTAL OIL CO.)<br><br>* Ansprüche 1, 5, 6 *<br><br>— | 1-3 | G 01 M  3/26<br>G 01 M 13/00 |
| X | <u>US - A - 4 135 386</u> (M.L. PETERSON et al.)<br><br>* Anspruch 1 *<br><br>——— | 1 | |

**RECHERCHIERTE SACHGEBIETE (Int. Cl.³)**

G 01 M  3/00

G 01 M 13/00

G 01 N 19/08

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 30-11-1981 | KÖHN |

EPA form 1503.1   06.78